# EUROPÄISCHE PATENTSCHRIFT

(11) **EP 2 245 353 B1**
(45) Veröffentlichungstag und Bekanntmachung des Hinweises auf die Patenterteilung: **16.05.2012**
(21) Anmeldenummer: 09714318.4
(22) Anmeldetag: 24.02.2009
(51) Int. Cl.: F16L 17/04, F16L 21/06, F16L 37/091

(54) **VERANKERUNGSELEMENT FÜR ROHRKUPPLUNGEN**
ANCHORING ELEMENT FOR PIPE COUPLINGS
ELÉMENT D'ANCRAGE POUR DES RACCORDS DE TUYAUTERIE

(30) Priorität: 28.02.2008 CH 3012008
(43) Veröffentlichungstag der Anmeldung: 03.11.2010
(73) Patentinhaber: Straub Werke AG, 7323 Wangs (CH)
(72) Erfinder: SUDAR, Damir, CH-7310 Bad Ragaz (CH)
(74) Vertreter: Künsch, Joachim
(86) Internationale Anmeldenummer: PCT/IB2009/050739
(87) Internationale Veröffentlichungsnummer: WO 2009/107061

(56) Entgegenhaltungen:
- EP-A- 0 447 955
- EP-A- 1 245 889
- EP-A- 1 840 434
- WO-A-2006/100628
- WO-A-2008/004173

## Beschreibung

Die Erfindung betrifft ein hülsenförmiges Verankerungselement für Rohrkupplungen zum Verbinden glattendiger Rohre, mit einem im wesentlichen zylindrischen Gehäuse und wenigstens einem im Gehäuse angeordneten Dichtelement aus gummielastischem Werkstoff, wobei das Verankerungselement im Gehäuse angeordnet ist, im wesentlichen aus einzelnen, über verformbare Stege miteinander verbundenen, im wesentlichen in axialer Richtung verlaufenden, im Längsschnitt C-förmig ausgebildeten Längsträgern besteht, deren Enden als radial nach innen abgewinkelte Schenkel ausgebildet sind, wobei die freien Enden der Schenkel beim Verspannen der Rohrkupplung mit wenigstens einem der Rohre zum Eingriff bringbar sind und die Stege durch zwischen den einzelnen Längsträgern axial verlaufende, von den freien Enden der Schenkel ausgehende Längsschlitze im Verankerungselement gebildet werden

Rohrkupplungen der obengenannten Art werden zum zugfesten Verbinden glattendiger Rohre eingesetzt. Beim Verspannen der Rohrkupplung wird über das Verankerungselement eine kraftschlüssige Verbindung zwischen den zwei Rohren hergestellt.

Beispielsweise aus der WO 2006/100628 A1 der Anmelderin ist eine solche Rohrkupplung bekannt Das Verankerungselement kann bei dieser Lösung einstückig ausgebildet sein oder aus zwei Einzelteilen bestehen. Für den Kraftfluss der zu übertragenden Kräfte ist es jedoch vorteilhaft, das Verankerungselement einstückig auszubilden, da bei reiner Zugbelastung der Rohre die Zugkräfte direkt über das Verankerungselement übertragen werden und das Gehäuse daran nicht beteiligt ist und somit entsprechend dünnwandiger und damit leichter dimensioniert werden kann. Das Verankerungselement gemäss dieser bekannten Schrift besteht aus einzelnen Längsträgern, die jeweils mittels mehreren Stegen miteinander verbunden sind.

Dieses Verankerungselement ist, in Umfangsrichtung gesehen, relativ starr. Es lässt sich daher im Umfang, bzw. im Durchmesser nur sehr beschränkt verformen und kann sich somit beispielsweise unterschiedlichen Aussendurchmessern der zu verbindenden Rohr nur sehr beschränkt anpassen.

Der Erfindung liegt daher die Aufgabe zugrunde, eine Verankerungselement für eine Rohrkupplung zu schaffen, das eine hohe Flexibilität in Umfangsrichtung und gleichzeitig eine gute Belastbarkeit in axialer Richtung aufweist.

Gemäss der Erfindung wird dadurch erreicht, dass zwischen zwei einander benachbarten Längsträgern jeweils nur ein einzelner Steg vorgesehen ist und die beiden Stege eines Längsträgers zur Verbindung mit den benachbarten Längsträgern in Umfangsrichtung jeweils relativ zueinander in axialer Richtung versetzt angeordnet sind. Durch die versetzte Anordnung der Stege, d.h. dadurch, dass diese miteinander nicht fluchten, wird bewirkt, dass das Verankerungselement in Umfangsrichtung verformbar, bzw. insbesondere stauchbar ist. Durch das Stauchen des Verankerungselementes in Umfangsrichtung verringert sich auch dessen Aussen- bzw. Innendurchmesser.

Eine vorteilhafte Ausführung des Verankerungselementes besteht darin, dass die Stege entlang den Längsträgern asymmetrisch verteilt angeordnet sind. Durch die asymmetrische Anordnung der Stege bilden die Stege zusammen mit den Längsträgern eine Art Zick-Zack-Form, wobei die Stege die Funktion von Gelenken übernehmen.

Die Stege sind zweckmässigerweise in Längsrichtung der Längsträger abwechslungsweise nach aussen zu den Schenkeln hin versetzt angeordnet. Dadurch, dass die Stege nach aussen zu den Schenkeln hin versetzt angeordnet werden, können die Schlitze zwischen den Längsträgern beim radialen Stauchen des Verankerungselementes praktisch nur verkleinert, aber nicht vergrössert werden.

Wie oben erwähnt, bilden die Stege beim radialen Stauchen des Verankerungselementes eine Art Gelenk. Um eine gute Verformbarkeit der Stege zu erreichen, ist es daher vorteilhaft, dass wenigstens einige der Stege im in axialer Richtung verlaufenden Querschnitt wenigstens eine Querschnittsverjüngung aufweisen. Durch die Querschnittsverjüngung kann der Widerstand die Stege gegen Biegung und Stauchung noch geringer gehalten werden.

Die Querschnittsverjüngung wird zweckmässigerweise durch wenigstens eine zentrische Ausnehmung im mittleren Bereich des Steges gebildet. Diese Ausnehmung kann beispielsweise durch eine Bohrung oder Ausstanzung hergestellt werden. Der Verformungswiderstand des verbleibenden Stegquerschnitts wird durch diese Ausnehmung weiter reduziert.

Eine weitere vorteilhafte Ausführung besteht darin, dass die Querschnittsverjüngung durch wenigstens eine Kerbe im mittleren Bereich des Steges gebildet wird. Solche Kerben könne beispielsweise eingeprägt oder durch einen zerspanenden Bearbeitungsvorgang angebracht werden. Kerben ergeben im Prinzip vergleichbare Auswirkungen auf die Eigenschaften der Stege wie die vorerwähnten zentrischen Ausnehmungen.

Die Längsträger sind in deren mittlerem Bereich gemäss einer weiteren Ausbildung der Erfindung mit einer gegen die zentrale Längsachse des Verankerungselementes radial vorspringen Sicke versehen. Eine solche Sicke ergibt mehrere Vorteile: Zum Einen bildet die Sicke eine Schwächungsstelle, welche eine Biegebewegung der Längsträger um den Bereich der Sicke herum erleichtert. Zum Andern ermöglicht eine Sicke eine axiale Fixierung des Verankerungselementes im Gehäuse..

Die Sicken sind im Längsschnitt der Längsträger vorteilhaft im wesentlichen U-förmig, mit flachem Boden, ausgebildet. Der flache Boden der Sicken verhindert deren Kerbwirkung. Ausserdem wird gewährleistet, dass das Dichtelement nicht durch scharfe Kanten verletzt wird.

Alle Längsträger weisen vorteilhaft an der selben axialen Lage eine Sicke auf. Die Sicken der Längsträger bilden somit zusammen eine Art umlaufender Nut an der Mantelfläche des Verankerungselementes.

Das Gehäuse weist zweckmässigerweise an seiner Innenseite entlang dem Umfang wenigstens eine formschlüssig in die Sicke des Verankerungselementes eingreifende Noppe auf. Durch das formschlüssige Eingreifen der Noppe(n) des Gehäuses in die Sicke des Verankerungselementes wird verhindert, dass das Verankerungselement axial aus dem Gehäuse herausrutschen kann. Das Gehäuse braucht somit keine zusätzlichen Seitenwände für diese Funktion.

Für eine gleichmässige Verteilung der Kräfte sind vorteilhaft mehrere über den Umfang verteilt angeordnete Noppen vorgesehen. Durch mehrere über den Umfang verteilt angeordnete Noppen wird in jedem Fall ein Formschluss zwischen dem Gehäuse und dem Verankerungselement gewährleistet.

Die Noppen sind im Querschnitt zweckmässigerweise etwa tellerförmig ausgebildet. Der Boden der etwa tellerförmig ausgebildeten Noppen ist vorzugsweise flach. Die Noppen entsprechen im Querschnitt somit etwa demjenigen der Sicke im mittleren Bereich der Längsträger am Verankerungselement.

Eine weitere vorteilhafte Ausführung besteht darin, dass die Noppen im Querschnitt etwa kugelkalottenförmig ausgebildet sind. Kugelkalottenförmige Noppen ergeben eine geringe Kerbwirkung am Gehäuse. Die Sicken an den Längsträgern sind dann entsprechend etwa U-förmig ausgebildet.

Die Schenkel verjüngen sich zweckmässig zu deren freiem Ende der hin - tangential, bzw. über den Umfang des Verankerungselementes gemessen - in der Breite keilförmig. Durch diese keilförmige Verjüngung wird verhindert, dass sich die radial nach innen gebogenen Schenkel gegenseitig überlappen.

Damit die Rohrkupplung auf den miteinander zu verbindenden Rohren verspannt werden kann weist das Gehäuse meistens eine in axialer Richtung verlaufende Öffnung auf. Damit nun ein radiales Austreten des Verankerungselementes, bzw. des Dichtelementes durch diese Öffnung nicht möglich ist, ist vorteilhaft zwischen dem Gehäuse und dem Verankerungselement eine elastisch verformbare oder in Umfangsrichtung gewölbte Stahlbrücke angeordnet ist, die sich über einen Teil des Umfanges des Gehäuses erstreckt, wobei wenigstens eines der in Umfangsrichtung weisenden Enden V-förmig zugespitzt ist. Durch die V-förmig zugespitzten Enden wird ein Einhaken der Stahlbrücke in den Schlitzen des Verankerungselementes vermieden.

Der Spitzenwinkel der zugespitzten Enden der Stahlbrücke beträgt zweckmässigerweise zwischen 60° und 120°, vorzugsweise etwa 90°. Dieser Winkelbereich gewährleiste, dass die Stahlbrücke beim Verspannen der Rohrkupplung gut über die Längsträger des Verankerungselementes hinweggleitet. Die Stahlbrücke ist in der Regel im Gehäuse, beispielsweise durch eine Punktschweissung fixiert. Wenn nun die Längsträger des Verankerungselementes eine Sicke aufweisen, kann die etwas nach innen ragende Spitze der Stahlbrücke ebenfalls in die Sicke eingreifen und ein axiales Verschieben des Verankerungselementes im Gehäuse verhindern.

Die Erfindung soll nachstehend, anhand der sie beispielsweise wiedergebenden Zeichnungen, näher erläutert werden.
Es zeigen:
- Fig. 1: eine erfindungsgemässe Rohrkupplung, im Längsschnitt
- Fig. 2: eine Teil-Abwicklung des Gehäuses und des darin angeordneten Verankerungselements gemäss Fig. 1
- Fig. 3: einen Querschnitt durch die Teil-Abwicklung gemäss Fig. 2, entlang der Linie A -A,

- Fig. 4: eine perspektivische Ansicht der in den Fig. 1 bis 3 dargestellten Rohrkupplung, von der Aussenseite her,
- Fig. 5: eine perspektivische Ansicht der in den Fig. 1 bis 3 dargestellten Rohrkupplung, von der Innenseite her,
- Fig. 6: Teil eines Zuschnitts für ein erfindungsgemässes Verankerungselement, in gestrecktem Zustand,
- Fig. 7: Teil eines erfindungsgemässen Verankerungselementes, in geformtem Zustand,
- Fig. 8: einen Längsschnitt durch das in Fig. 7 dargestellte Verankerungselement, entlang der Linie B - B,
- Fig. 9: ein Teilausschnitt eines erfindungsgemässen Verankerungselementes, in perspektivischer Darstellung.
- Fig.10: einen Zuschnitt in gestrecktem Zustand, analog Fig. 6, jedoch ohne Ausnehmung im Bereich der Stege,
- Fig.11: eine schematische Darstellung eines Teils eines erfindungsgemässen Verankerungselementes, in unverformtem Zustand,
- Fig.12: eine schematische Darstellung eines Teils eines erfindungsgemässen Verankerungselementes entsprechend Fig. 11, in verformtem Zustand
- und Fig.13: eine Teil-Seitenansicht eines Rohres mit einem darin eingreifenden, erfindungsgemässen Verankerungselement

Die Bezugszeichenliste gehört, so wie die Patentansprüche, zum Bestandteil der Offenbarung.

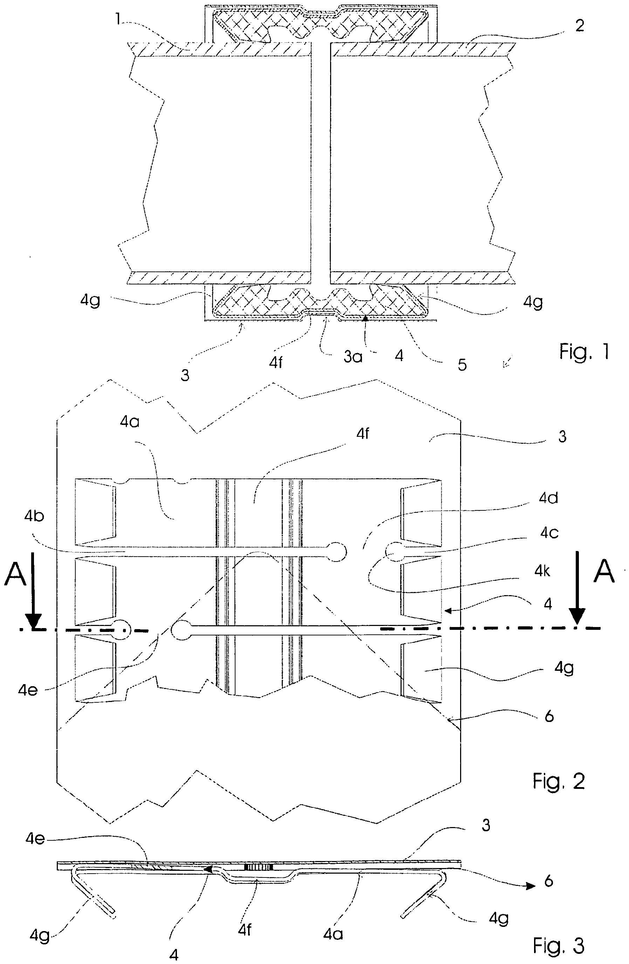

Die aus Fig. 1 ersichtliche, im Längsschnitt dargestellte Kupplung zum kraftschlüssigen Verbinden von zwei glattendigen Rohren 1, 2 umfasst ein im wesentlichen zylindrisches Gehäuse 3 und ein darin angeordnetes, hülsenförmiges Verankerungselement 4. Das Verankerungselement 4 ist an seinen beiden Enden mit radial nach innen abgewinkelten Schenkeln 4g versehen. Die freien Enden der Schenkel 4g stehen mit den Rohren 1, 2 im kraftschlüssigen Eingriff. Somit können bspw. axiale Zugkräfte direkt über das Verankerungselement 4 übertragen werden. Das Verankerungselement 4 ist in seinem mittleren Bereich mit einer sich vorzugsweise über den gesamten Umfang erstrecken Sicke 4f versehen. Das Gehäuse 3 weist an seinem Umfang wenigstens eine formschlüssig in die Sicke 4f eingreifende Noppe 3a auf. Anstelle einzelner Noppen 3a kann ebenfalls eine umlaufende Sicke vorgesehen werden. Im Innern des Verankerungselementes 4 ist ein Dichtelement 5 aus gummielastischem Werkstoff angeordnet.

Aus Fig. 2 ist eine Teil-Abwicklung des Gehäuses 3 mit darin angeordnetem Verankerungselement 4 ersichtlich. Das abgewickelte Verankerungselement 4 weist parallel zueinander angeordnete, sich in axialer Richtung erstreckende Längsträger 4a auf. Diese Längsträger 4a werden durch von beiden axialen Enden des Verankerungselementes ausgehende Schlitze 4b, 4c gebildet. Zwischen den Schlitzen 4b, 4c verbleiben Stege 4d, 4e. Die Stege 4d, 4e werden durch Kerben 4k am Ende der Schlitze 4b, 4c begrenzt. Die Kerben 4k ergeben einerseits eine gute Verformbarkeit der Stege 4d, 4e und verringern andererseits die Kerbwirkung der Schlitze 4d, 4e. Im mittleren Bereich des Verankerungselementes 4 ist die Sicke 4f deutlich ersichtlich. Die Enden der Längsträger 4a sind mit radial nach innen abgebogenen Schenkeln 4g verbunden. Zwischen dem Gehäuse 3 und dem Verankerungselement 4 ist eine Stahlbrücke 6 angeordnet. Die Stahlbrücke 6 dient dazu, um eine nicht dargestellte, ein Verspannen des Gehäuses 3 ermöglichende spaltförmige Öffnung des Gehäuses 3 zu überbrücken und ein radiales Austreten des Verankerungselementes 4, bzw. des Dichtelementes 5 durch die spaltförmige Öffnung zu verhindern.

Der aus Fig. 3 ersichtliche Querschnitt zeigt das Gehäuse 3 und das darin angeordnete, im Längsschnitt im wesentlichen C-förmig ausgebildete Verankerungselement 4. Am Verankerungselement 4 sind die mit einer Sicke 4f versehenen Längsträger 4a, die abgewinkelten Schenkel 4g und die zwischen den Längsträgern verbleibenden Stege 4d ersichtlich. Zwischen dem Gehäuse 3 und dem Verankerungselement 4 ist die flache Stahlbrücke 6 angeordnet.

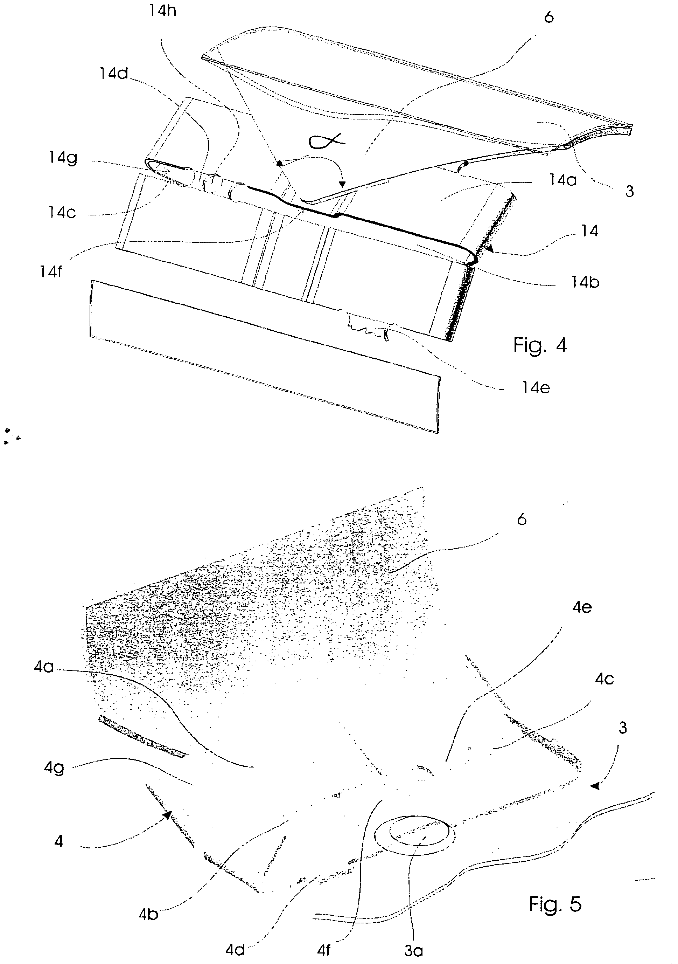

Die aus Fig. 4 ersichtliche perspektivische Darstellung zeigt eine Variante des in Fig. 2 und 3 dargestellten Verankerungselementes 14. Dieses Verankerungselementes 14 weist ebenfalls durch von beiden Enden ausgehende Schlitze 14b, 14c erzeugte, über verformbare Stege 14d, 14e miteinander verbundene Längsträger 14a auf. Die Stege 14d, 14e auf beiden Seiten eines Längsträgers 14a sind zueinander in axialer Richtung versetzt. Dadurch wir eine Stauchung, bzw. Verformung des Verankerungselementes 4 in Umfangsrichtung ermöglicht. Um die Verformbarkeit der Stege 14d, 14e noch zu verbessern, sind diese, im Unterschied zu der in Fig. 2 ersichtlichen Ausführung, im mittleren Bereich durch eine Ausnehmung 14h im Querschnitt reduziert. Zwischen dem Verankerungselement 4 und dem Gehäuse 3 ist die Stahlbrücke 6 angeordnet. Dabei ist deutlich ersichtlich, dass die in Umfangsrichtung weisenden Enden der Stahlbrücke V-förmig zugespitzt sind. Der Spitzenwinkel α beträgt ca. 90°. Durch das Zuspitzen der Enden der Stahlbrücke 6 wird auch verhindert, dass die Stahlbrücke 6 an den Schlitzen 14c, 14d "einhängt" und das Verspannen der Rohrkupplung durch Blockieren beeinträchtigt wird.

Fig. 5 zeigt eine perspektivische Ansicht de Verankerungselementes gemäss Fig. 2 von innen her. Dabei wird auch deutlich, dass beim Verspannen der Rohrkupplung das V-förmige Ende der Stahlbrücke 6 ohne grösseren Widerstand über die Längsträger 4a des Verankerungselementes 4 hinweggleiten kann. Im mittleren Bereich der ist das Gehäuse mit Noppen 3a versehen. Die Noppen 3a greifen formschlüssig in die Sicke 4f am Verankerungselement ein und verhindern somit ein axiales Verschieben des Verankerungselementes 4 gegenüber dem Gehäuse 3.

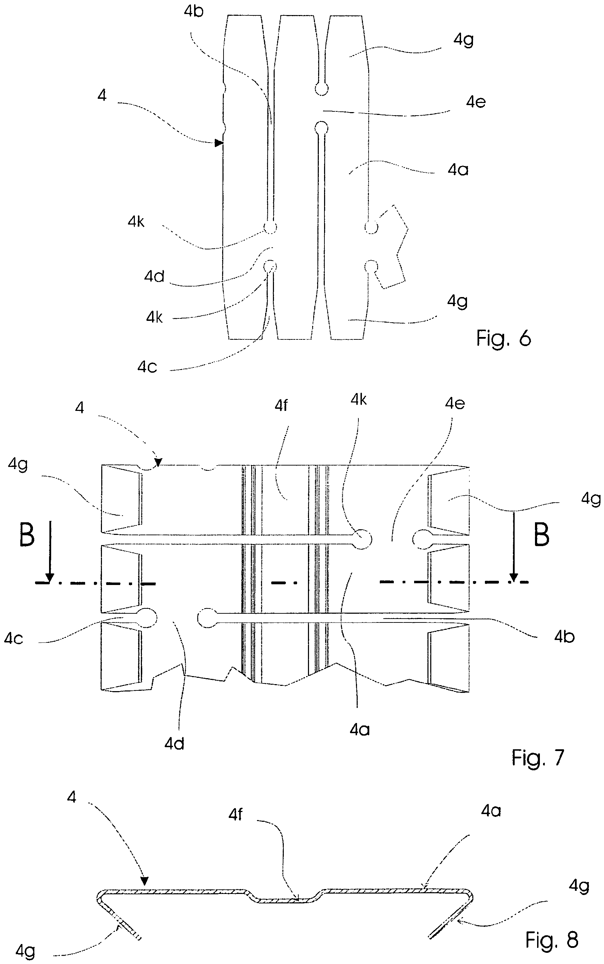

Aus Fig. 6 ist der Zuschnitt für ein Verankerungselement 4 in gestreckter Form ersichtlich. Dieser kann beispielsweise durch einen fortlaufenden Stanzvorgang oder durch Laser- bzw. Wasserstrahlschneiden aus Bandmaterial erzeugt werden. Je nach Nenndurchmesser der Rohrkupplung wird dann ein kürzeres oder längeres Stück des Zuschnitts zur Herstellung des Verankerungselementes 4 verwendet. Aus der Abwicklung sind die Kerben 4k am Ende der Schlitze 4b, 4c deutlich zu erkennen. Zwischen den Kerben 4k verbleiben die Stege 4d. 4e. Die Enden der Längsträger 4a sind mit Schenkeln 4g verbunden, deren Breite sich zum freien Ende hin keilförmig verjüngt.

Fig. 7 zeigt das Verankerungselement 4 gemäss Fig. 2, jedoch unter Weglassung des Gehäuses und der Stahlbrücke. Dabei ist die axiale Versetzung der Stege 4d, 4e auf beiden Seiten eines Längsträgers 4a besonders deutlich ersichtlich.

Der aus Fig. 8 ersichtliche Längsschnitt durch das Verankerungselement 4 zeigt das C-förmige Profil mit den von den Längsträgern nach innen abgewinkelten Schenkeln 4g. In der Mitte der Längsträger 4a sind diese mit einer radial nach innen vorspringenden Sicke 4f versehen. Die Sicke ist im Längsschnitt der Längsträger im wesentlichen U-förmig und vorzugsweise mit flachem Boden ausgebildet.

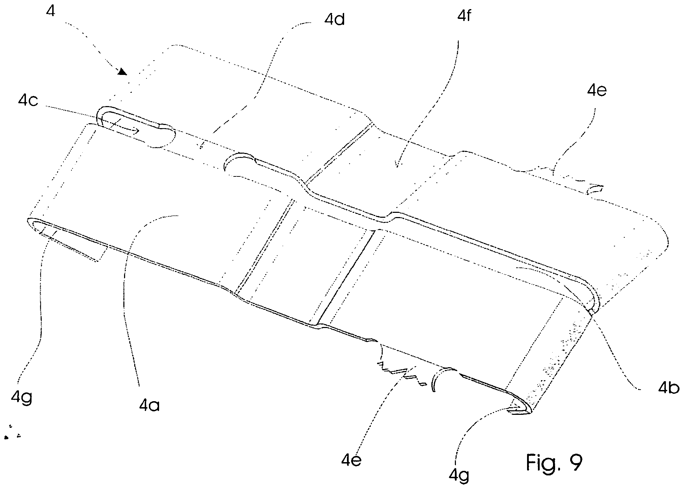

Fig. 9 zeigt einen Ausschnitt des Verankerungselementes 4, in perspektivischer Darstellung. Dabei sind die durch die Schlitze 4b, 4c gebildeten Längsträger 4a besonders plastisch erkennbar. Die Längsträger 4a werden nur durch die zwischen den Schlitzen 4b, 4c verbleibenden Stege 4d, 4e zusammengehalten. Dadurch, dass die Stege 4d, 4e relativ zueinander in axialer Richtung versetzt angeordnet sind, wird eine Verformbarkeit des Verankerungselements 4 in Umfangsrichtung ermöglicht. An den Enden der Längsträger 4a sind die radial nach innen abgebogenen Schenkel 4g erkennbar.

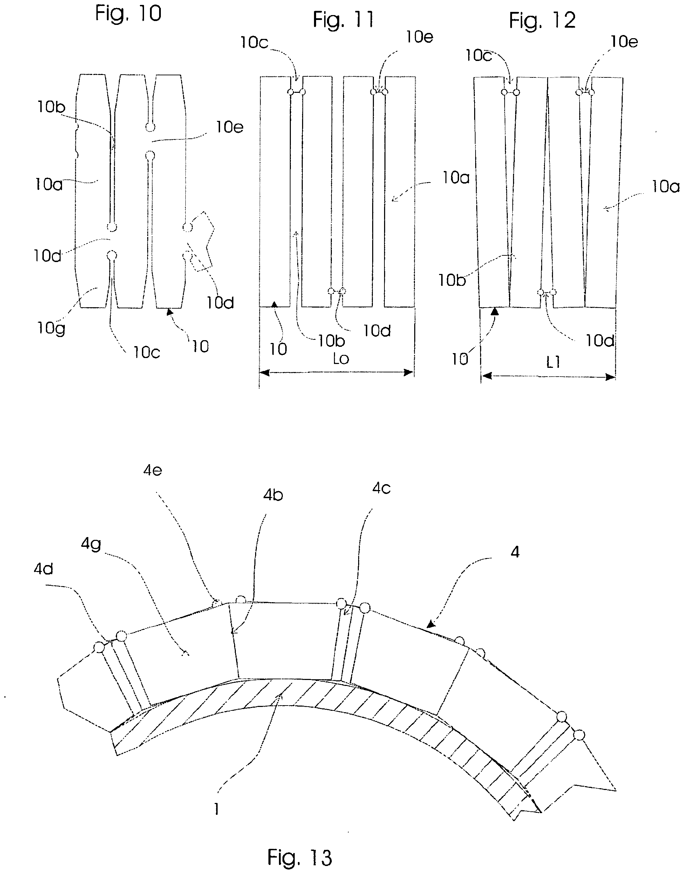

Aus den Fig. 10 bis 12 ist ein Verankerungselement 10 ersichtlich. Der in Fig. 10 dargestellte Zuschnitt ist analog zu demjenigen in Fig. 6. In den Fig. 11 und 12 sind die Stege 10d, 10e an den Längsträgern 10a symbolisch durch Gelenke ersetzt.

Im unverformten, in Fig. 11 dargestellten Zustand sind die Längsträger 10a parallel zueinander angeordnet. Beim Verspannen der Rohrkupplung werden in Umfangsrichtung wirkende Schubkräfte erzeugt, die ein Zusammenschieben der Längsträger 10a bewirken. Ein solches zusammenschieben wird jedoch im Bereich der Stege 10d, 10e verhindert. Die über 4 Längsträger gemessene Distanz beträgt im unverformten Zustand Lₒ.

Im zusammengeschobenen, aus Fig. 12 ersichtlichen Zustand sind die längeren Schlitze 10b am freien Ende geschlossen. Durch die Gelenkwirkung der Stege 10d, 10e werden dagegen die kürzeren Schlitze 10c etwas geöffnet. Die über 4 Längsträger gemessene Distanz beträgt jetzt im verformten Zustand L1 und ist kleiner als Lₒ.

Die aus Fig. 13 ersichtliche Teil-Seitenansicht zeigt das Verankerungselement 4 im verspannten Zustand der Rohrkupplung. Dabei sind die Schlitze 4b geschlossen. Durch die keilförmige Verjüngung der Schenkel 4g besteht nur noch zwischen jedem zweiten Schenkel eine Lücke, durch die das Dichtelement austreten kann.

### Bezugszeichenliste

- 1: Rohr
- 2: Rohr
- 3: Gehäuse
- 3a: Noppen
- 4: Verankerungselement
- 4a: Längsträger
- 4b: Schlitz
- 4c: Schlitz
- 4d: Steg
- 4e: Steg
- 4f: Sicke
- 4g: Schenkel
- 4k: Kerbe
- 5: Dichtelement
- 6: Stahlbrücke

- 10: Verankerungselement
- 10a: Längsträger
- 10b: Schlitz
- 10c: Schlitz
- 10d: Steg
- 10e: Steg
- 10g: Schenkel
- 14: Verankerungselement
- 14a: Längsträger
- 14b: Schlitz
- 14c: Schlitz
- 14d: Steg
- 14e: Steg
- 14f: Sicke
- 14g: Schenkel
- 14h: Ausnehmung

## Patentansprüche

1. Hülsenförmiges Verankerungselement (4, 14) für Rohrkupplungen zum Verbinden glattendiger Rohre (1, 2) mit einem im wesentlichen zylindrischen Gehäuse (3) und wenigstens einem im Gehäuse (3) angeordnetem Dichtelement (5) aus gummielastischem Werkstoff, wobei das Verankerungselement (4, 14) im Gehäuse (3) anordenbar ist und im wesentlichen aus einzelnen, über verformbare Stege (4d, 4e; 10d, 10e; 14d, 14e) miteinander verbundene, im wesentlichen in axialer Richtung verlaufende, im Längsschnitt C-förmig ausgebildeten Längsträgern (4a,10a, 14a) umfasst, deren Enden jeweils als radial nach innen abgewinkelte Schenkel (4g, 14g) ausgebildet sind, wobei die freien Enden der Schenkel (4g, 14g) beim Verspannen der Rohrkupplung mit wenigstens einem der Rohre (1, 2) zum Eingriff bringbar sind und die Stege (4d, 4e; 10d, 10e; 14d, 14e) durch zwischen den einzelnen Längsträgern (4a,10a, 14a) axial verlaufende, von den freien Enden der Schenkel (4g, 14g) ausgehende Schlitze (4b, 4c; 10b, 10c; 14b, 14c) im Verankerungselement (4, 14) gebildet werden, **dadurch gekennzeichnet, dass** zwischen zwei einander benachbarten Längsträgern (4a,10a, 14a) jeweils nur ein einzelner Steg (4d, 4e; 10d, 10e; 14d, 14e) vorgesehen ist und die beiden Stege (4d, 4e; 10d, 10e; 14d, 14e) eines Längsträgers (4a,10a, 14a) zur Verbindung mit den benachbarten Längsträgern (4a,10a, 14a) in Umfangsrichtung jeweils relativ zueinander in axialer Richtung versetzt angeordnet sind.

2. Verankerungselement nach Anspruch 1, **dadurch gekennzeichnet, dass** die Stege (4d, 4e; 10d, 10e; 14d, 14e) entlang den Längsträgern (4a,10a, 14a) asymmetrisch verteilt angeordnet sind.

3. Verankerungselement nach Anspruch 1 oder 2, **dadurch gekennzeichnet, dass** die Stege (4d, 4e; 10d, 10e; 14d, 14e) in Längsrichtung der Längsträger (4a,10a, 14a) abwechslungsweise nach aussen zu den Schenkeln (4g, 14g) hin versetzt angeordnet sind.

4. Verankerungselement nach einem der vorhergehenden Ansprüche, **dadurch gekennzeichnet, dass** wenigstens einige der Stege (14d, 14e) im in axialer Richtung verlaufenden Querschnitt wenigstens eine Querschnittsverjüngung aufweisen.

5. Verankerungselement nach Anspruch 4, **dadurch gekennzeichnet, dass** die Querschnittsverjüngung durch wenigstens eine zentrische Ausnehmung (14h) im mittleren Bereich des Steges (14d, 14e) gebildet wird.

6. Verankerungselement nach Anspruch 4 oder 5, **dadurch gekennzeichnet, dass** die Querschnittsverjüngung durch wenigstens eine Kerbe im mittleren Bereich des Steges gebildet wird.

7. Verankerungselement. nach einem der vorhergehenden Ansprüche, **dadurch gekennzeichnet, dass** die Längsträger (4a, 14a) in deren mittlerem Bereich mit einer gegen die zentrale Längsachse des Verankerungselementes (4, 14) radial vorspringen Sicke (4f, 14f) versehen sind.

8. Verankerungselement nach Anspruch 7, **dadurch gekennzeichnet, dass** die Sicke (4f, 14f) im Längsschnitt der Längsträger (4a, 14a) im wesentlichen U-förmig, mit flachem Boden, ausgebildet ist.

9. Verankerungselement nach einem der Ansprüche 7 oder 8, **dadurch gekennzeichnet, dass** alle Längsträger (4a, 14a) an der selben axialen Lage eine Sicke (4f, 14f) aufweisen.

10. Für eine Rohrkupplung vorgesehenes Gehäuse (3) mit einem Verankerungselement (4, 14) nach einem der Ansprüche 7 bis 9, **dadurch gekennzeichnet, dass** das Gehäuse (3) an seiner Innenseite entlang dem Umfang wenigstens eine formschlüssig in die Sicke (4f, 14f) des Verankerungselementes (4, 14) eingreifende Noppe (3a) aufweist.

11. Gehäuse nach Anspruch 10, **dadurch gekennzeichnet, dass** mehrere über den Umfang verteilt angeordnete Noppen (3a) vorgesehen sind.

12. Gehäuse nach Anspruch 10 oder 11, **dadurch gekennzeichnet, dass** die wenigstens eine Noppe (3a) im Querschnitt etwa tellerförmig oder etwa kugelkalottenförmig ausgebildet ist.

13. Verankerungselement nach einem der vorhergehenden Ansprüche 1-2, **dadurch gekennzeichnet, dass** sich die Schenkel (4g, 14g) zu deren freien Ende hin - tangential, bzw. über den Umfang des Verankerungselementes gemessen - in der Breite keilförmig verjüngen.

14. Rohrkupplung mit einem Verankerungselement (4, 14) nach einem der vorhergehenden Ansprüche , **dadurch gekennzeichnet, dass** zwischen dem Gehäuse (3) und dem Verankerungselement (4, 14) eine elastisch verformbare, bzw. in Umfangsrichtung gewölbte Stahlbrücke (6) angeordnet ist, die sich über einen Teil des Umfanges des Gehäuses erstreckt, wobei wenigstens eines der in Umfangsrichtung weisenden Enden der Strahlbrücke (6) V-förmig zugespitzt ist.

15. Rohrkupplung nach Anspruch 14, **dadurch gekennzeichnet, dass** der Spitzenwinkel (α) der zugespitzten Enden der Stahlbrücke (6) zwischen 60° und 120°, vorzugsweise etwa 90° beträgt.

## Claims

1. A sleeve-shaved anchoring element (4, 14) for pipe couplings for connecting smooth-ended pipes (1, 2) to an essentially cylindrical housing (3) and at least one sealing element (5) of elastic material that is arranged in the housing (3), wherein the anchoring element (4, 14) can be arranged in the housing (3) and essentially comprises individual longitudinal supports (4a, 10a, 14a) that are connected to one another by means of deformable webs (4d, 4e; 10d, 10e; 14d, 14e) and essentially extend in the axial direction, wherein said longitudinal supports are, when viewed in the form of a longitudinal section, designed in a C-shaped fashion and their ends are respectively realized in the form of limbs (4g, 14g) that are angled radially inward, and wherein the free ends of the limbs (4g, 14g) can be engaged with at least one of the pipes (1, 2) during the interlocking of the pipe coupling and the webs (4d, 4e; 10d, 10e; 14d, 14e) are formed by slots (4b, 4c; 10b, 10c; 14b, 14c) in the anchoring element (4, 14) that axially extend between the individual longitudinal supports (4a, 10a, 14a) and originate at the free ends of the limbs (4g, 14g), **characterized in that** only one individual web (4d, 4e; 10d, 10e; 14d, 14e) is respectively provided between two adjacent longitudinal supports (4a, 10a, 14a) and the two webs (4d, 4e; 10d, 10e; 14d, 14e) of a longitudinal support (4a, 10a, 14a) respectively are arranged offset relative to one another in the axial direction in order to be connected to the adjacent longitudinal supports (4a, 10a, 14a) in the circumferential direction.

2. The anchoring element according to Claim 1, **characterized in that** the webs (4d, 4e; 10d, 10e; 14d, 14e) are arranged along the longitudinal supports (4a, 10a, 14a) in an asymmetrically distributed fashion.

3. The anchoring element according to Claim 1 or 2, **characterized In that** the webs (4d, 4e; 10d, 10e; 14d, 14e) alternately are outwardly offset toward the limbs (4g, 14g) in the longitudinal direction of the longitudinal supports (4a, 10a, 14a).

4. The anchoring element according to one of the preceding claims, **characterized in that** at least a few of the webs (14d, 14e) feature at least one cross-sectional taper in the axially extending cross section.

5. The anchoring element according to Claim 4, **characterized in that** the cross-sectional taper is formed by at least one central recess (14h) in the central region of the web (14d, 14e).

6. The anchoring element according to Claim 4 or 5, **characterized In that** the cross-sectional taper is formed by at least one notch in the central region of the web.

7. The anchoring element according to one of the preceding claims, **characterized in that** the longitudinal supports (4a, 14a) are provided with a bead (4f, 14f) that radially protrudes toward the central longitudinal axis of the anchoring element (4, 14) in their central region.

8. The anchoring element according to Claim 7, **characterized In that** the bead (4f, 14f) is essentially realized in a U-shaped fashion with a flat bottom in a longitudinal section of the longitudinal supports (4a, 14a).

9. The anchoring element according to Claim 7 or 8, **characterized In that** all longitudinal supports (4a, 14a) feature a bead (4f, 14f) at the same axial position.

10. A housing (3) provided for a pipe coupling with an anchoring element (4, 14) according to one of Claims 7 to 9, **characterized in that** the housing (3) features at least one knob (3a) that positively engages into the bead (4f, 14f) of the anchoring element (4, 14) along the circumference on its inner side.

11. The housing according to Claim 10, **characterized In that** several knobs (3a) are provided and distributed over the circumference.

12. The housing according to Claim 10 or 11, **characterized in that** the at least one knob (3a) has a cross section that is realized approximately in the shape of a disk or approximately in the shape of a spherical cap.

13. The anchoring element according to one of preceding Claims 1-9, **characterized In that** the width of the limbs (4g, 14g) is tapered in a wedge-shaped fashion toward their free ends - respectively measured tangentially or over the circumference of the anchoring element.

14. A pipe coupling with an anchoring element (4, 14) according to one of the preceding claims, **characterized In that** a steel bridge (6) is arranged between the housing (3) and the anchoring element (4, 14) and extends over part of the circumference of the housing, wherein said steel bridge respectively is elastically deformable and curved in the circumferential direction, and wherein at least one of the ends of the steel bridge (6) that are directed in the circumferential direction is pointed in a V-shaped fashion.

15. The pipe coupling according to Claim 14, **characterized In that** the point angle (α) of the pointed ends of the steel bridge (6) lies between 60° and 120°, preferably at about 90.,

## Revendications

1. Elément d'ancrage en forme de manchon (4, 14) pour des raccords de tuyauterie pour relier des tuyaux aux extrémités lisses (1, 2) comprenant un logement essentiellement cylindrique (3) et au moins un élément d'étanchéité (5) en matériau élastique disposé dans le logement (3), sachant que l'élément d'ancrage (4, 14) peut être disposé dans la logement (3) et comprend essentiellement des longerons (4a,10a, 14a) individuels formés en C dans la coupe longitudinale s'étendant essentiellement dans la direction axiale, reliés entre eux par des montants déformables (4d, 4e; 10d, 10e; 14d, 14e), les extrémités des longerons étant respectivement formées en tant que branches (4g, 14g) coudées radialement vers l'intérieur, sachant que les extrémités libres des branches (4g, 14g) peuvent être mises en prise avec au moins un des tuyaux (1, 2) lorsque le raccord de tuyauterie est serré, et les montants (4d, 4e; 10d, 10e; 14d, 14e) sont formés par des fentes (4b, 4c; 10b, 10c; 14b, 14c) dans l'élément d'ancrage (4, 14) partant des extrémités libres des branches (4g, 14g), s'étendant axialement entre les longerons (4a,10a, 14a) individuels, **caractérisé en ce qu'**entre deux longerons (4a,10a, 14a) adjacents l'un à l'autre, respectivement un seul montant (4d, 4e; 10d, 10e; 14d, 14e) est prévu et les deux montants (4d, 4e; 10d, 10e; 14d, 14e) d'un longeron (4a,10a, 14a) sont placés en étant décalés dans le sens axial l'un par rapport à l'autre respectivement pour la liaison aux longerons voisins (4a,10a, 14a).

2. Elément d'ancrage selon la revendication 1, **caractérisé en ce que** les montants (4d, 4e; 10d, 10e; 14d, 14e) sont disposés en étant répartis de manière asymétrique le long des longerons (4a,10a, 14a).

3. Elément d'ancrage selon la revendication 1 ou 2, **caractérisé en ce que** les montants (4d, 4e; 10d, 10e; 14d, 14e), dans le sens longitudinal des longerons (4a,10a, 14a), sont disposés en étant à tour de rôle décalés vers extérieur en direction des branches (4g, 14g).

4. Elément d'ancrage selon l'une des revendications précédentes, **caractérisé en ce qu'**au moins quelques-uns des montants (14d, 14e) présentent au moins un rétrécissement de section transversale dans la section transversale s'étendant en direction axiale.

5. Elément d'ancrage selon la revendication 4, **caractérisé en ce que** le rétrécissement de section transversale est formé par au moins un évidement centrique (14h) dans la partie centrale du montant (14d, 14e).

6. Elément d'ancrage selon la revendication 4 ou 5, **caractérisé en ce que** le rétrécissement de section transversale est formé par au moins une entaille dans la partie centrale du montant.

7. Elément d'ancrage selon l'une des revendications précédentes, **caractérisé en ce que** les longerons (4a, 14a) sont dotés dans leur partie centrale, d'une nervure (4f, 14f) faisant saillie radialement contre l'axe longitudinal central de l'élément d'ancrage (4, 14).

8. Elément d'ancrage selon la revendication 7, **caractérisé en ce que** la nervure (4f, 14f) dans la section longitudinale du longeron (4a, 14a) est essentiellement en forme de U avec un fond plat.

9. Elément d'ancrage selon l'une des revendications 7 ou 8, **caractérisé en ce que** tous les longerons (4a, 14a) présentent une nervure (4f, 14f) sur la même position axiale.

10. Logement (3) prévu pour un raccord de tuyauterie comprenant un élément d'ancrage (4, 14) selon l'une des revendications 7 à 9, **caractérisé en ce que** le logement (3) présente sur son côté intérieur le long de la périphérie, au moins une boucle (3a) se mettant en prise par complémentarité de forme dans la nervure (4f, 14f) de l'élément d'ancrage (4, 14).

11. Logement selon la revendication 10, **caractérisé en ce que** plusieurs boucles (3a) disposées en étant réparties sur la périphérie sont prévues.

12. Logement selon la revendication 10 ou 11, **caractérisé en ce qu'**au moins une boucle (3a) est essentiellement en forme de disque ou essentiellement en forme de calotte sphérique en section transversale.

13. Elément d'ancrage selon l'une des revendications précédentes 1-9, **caractérisé en ce que** les branches (4g, 14g), en direction de leur extrémité libre, mesuré de manière tangentielle respectivement sur la périphérie de l'élément d'ancrage - se rétrécissent en forme de clavette dans la largeur.

14. Raccord de tuyauterie comprenant un élément d'ancrage (4, 14) selon l'une des revendications précédentes, **caractérisé en ce qu'**entre le logement (3) et l'élément d'ancrage (4, 14), un pont d'acier (6) déformable élastiquement, respectivement, bombé dans le sens périphérique, est disposé, lequel s'étend au-dessus d'une partie de la périphérie du logement, sachant qu'au moins une des extrémités du pont d'acier (6) orientées dans le sens périphérique est taillée en pointe en V.

15. Raccord de tuyauterie selon la revendication 14, **caractérisé en ce que** l'angle au sommet (α) des extrémités taillées en pointe du pont d'acier (6) fait entre 60° et 120°, de préférence essentiellement 90°.
